(19) **Europäisches Patentamt**

**European Patent Office**

**Office européen des brevets**

(11) **EP 1 671 992 A1**

(12) **EUROPEAN PATENT APPLICATION**

(43) Date of publication:
21.06.2006 Bulletin 2006/25

(51) Int Cl.:
*C08G 18/12* (2006.01)      *C08G 18/48* (2006.01)
*C08G 18/22* (2006.01)      *D01F 6/70* (2006.01)

(21) Application number: 05026916.6

(22) Date of filing: 09.12.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 20.12.2004 US 17090

(71) Applicants:
• **Bayer MaterialScience LLC**
**Pittsburgh**
**PA 15205 (US)**
• **RADICISPANDEX CORPORATION**
**Gastonia, NC 28052 (US)**

(72) Inventors:
• **Lawrey, Bruce D.**
**Moon Township**
**PA 15108-4619 (US)**

• **Robello, Robert F.**
**Gastonia**
**NC 28056 (US)**
• **Lane, Roger Dale**
**Tuscaloosa**
**AL 35404 (US)**
• **Smith, W. Brent**
**Tuscaloosa**
**AL 35406 (US)**

(74) Representative: **Bramer-Weger, Elmar**
**Bayer MaterialScience AG**
**Law & Patents**
**Patent and Licensing**
**51368 Leverkusen (DE)**

(54) **Spandex having low heat-set temperature and materials for their production**

(57)      Segmented polyurethane/ureas useful in the production of spandex with improved heat set are produced by chain extending an isocyanate-terminated prepolymer with a diamine chain extender that includes: (1) greater than 25 to 75 equivalent percent of an asymmetric aliphatic and/or cycloaliphatic diamine and (2) a linear diamine such as ethylene diamine in the presence of a solvent. The isocyanate-terminated prepolymer having an isocyanate group content of from about 2.25 to about 4 is produced by reacting a stoichiometric excess of an isocyanate with an isocyanate-reactive component that includes: (1) from about 25 to about 75 equivalent percent of a polyoxypropylene diol having a molecular weight in excess of 1500 Da and an average unsaturation level of less than about 0.03 meq/g and (2) from about 25 to about 75 equivalent percent of a polytetramethylene ether glycol having a molecular weight of at least 600 Da.

EP 1 671 992 A1

**Description**

**FIELD OF THE INVENTION**

The present invention relates to segmented polyurethane/ureas and spandex made therefrom having excellent heat set efficiency, elasticity, and mechanical properties, and to materials and processes for the production of such polyurethane/ureas and fibers. More particularly, the present invention pertains to polyurethane/ureas and spandex fibers made from isocyanate-terminated prepolymers derived from a mixture of a polytetramethylene ether glycol (PTMEG) and a low unsaturation, high molecular weight polyoxyalkylene diol by chain-extending the prepolymer with a chain extender component that includes specified amounts of linear diamine and at least one asymmetric aliphatic and/or cycloaliphatic diamine.

BACKGROUND OF THE INVENTION

Polyurethane/ureas having elastomeric characteristics in the forms of fibers and films have found wide acceptance in the textile industry. The term "spandex", often used to describe these elastomeric polyurethane/ureas, refers to long chain synthetic polymers made up of at least 85% by weight of segmented polyurethane. The term "elastane" is also used (e.g., in Europe) to describe these polymers.

Polymers used in making spandex are usually made by forming a prepolymer between a polymeric diol and a diisocyanate, and then reacting the resulting prepolymer with a diamine in a solvent. This prepolymer is sometimes referred to as a "capped glycol." The resulting polymer chains may then be extended by further reaction with one or more chain extenders. The chains may subsequently be terminated by the addition of a chain terminator. This chain terminator can be mixed with the chain extender or can be added separately, after the chain extender.

Spandex is typically prepared by reaction spinning, melt-spinning, dry-spinning, or wet-spinning a polyurethane solution either into a column filled with a hot inert gas such as air, nitrogen or steam, or into an aqueous bath to remove the solvent, followed by winding up the fiber. Dry-spinning is the process of forcing a polymer solution through spinneret orifices into a shaft to form a filament. Heated inert gas is passed through the chamber, evaporating the solvent from the filament as the filament passes through the shaft. The resulting spandex can then be wound on a cylindrical core to form a spandex supply package.

Because of its good elasticity and tensile strength, spandex has been used to make articles of clothing, disposable personal care products, upholstery and other commercial and industrial products. Spandex may be blended with other natural and/or man-made fibers and/or yarns.

Spandex is used for many different purposes in the textile industry, especially in underwear, form-persuasive garments, bathing wear, and elastic garments or stockings. The elastomeric fibers may be supplied as core spun elastomer yarns spun round with filaments or staple fiber yarns or as a staple fiber in admixture with non-elastic fibers for the purpose of improving the wearing qualities of fabrics which are not in themselves highly elastic.

The commercially preferred polymeric diol used to produce spandex is polytetramethylene ether glycol (PTMEG). PTMEG is a solid at room temperature and produces prepolymers, particularly, diphenylmethane diisocyanate ("MDI") prepolymers having extremely high viscosities.

However, despite the inherent difficulties of handling PTMEG, its high cost and the unsatisfactory hysteresis of fibers made with PTMEG, PTMEG continues to be the mainstay of spandex production because, to date, no satisfactory substitute has been found.

One potential substitute for PTMEG which has been evaluated is polyoxypropylene glycol ("PPG") which, in principle, could be used to prepare spandex fibers. Preparation of spandex fibers from a prepolymer made with a polyol component composed primarily of PPG is attractive from an economic point of view because the cost of PPG is significantly lower than that of PTMEG. In addition, fiber prepared from prepolymers made with PPGs exhibit excellent elongation and retractive or holding power. PPGs are inherently easier to handle than PTMEG because they are non-crystallizable, relatively low viscosity liquids with low pour points.

U.S. Patent 3,180,854, for example, discloses a polyurethane/urea fiber based on a prepolymer made with a 2000 Da molecular weight polyoxypropylene glycol. However, the properties of polyoxypropylene- derived spandex fibers are generally inferior to those of fibers based on PTMEG. Consequently, polyoxypropylene glycols have not been utilized commercially in spandex production.

High molecular weight polyoxypropylene glycols made by conventional processes contain high percentages of terminal unsaturation or monofunctional hydroxyl-containing species ("monol"). The monol is believed by many to act as a chain terminator, limiting the formation of the required high molecular weight polymer during chain extension and yielding products which are generally inferior in comparison to PTMEG- derived elastomers.

Unsaturation is measured in accordance with ASTM D-2849-69 "Testing Urethane Foam Polyol Raw Materials," and expressed as milliequivalents of unsaturation per gram of polyol (meq/g).

Lowering unsaturation and the attendant large monol fraction in polyoxypropylene polyols has been touted as a means for production of polyurethane elastomers having improved properties. For example, use of polyols having a low content of monofunctional species has been suggested as a method for increasing polymer molecular weight; and increased polymer molecular weight has, in turn, been cited as desirable in producing higher performance polymers.

U.S. Patent 5,340,902 discloses that unsaturation levels of less than 0.03 milliequivalents/g are beneficial in the production of spandex fibers but does not provide any examples which illustrate use of polyols having unsaturation levels of less than 0.03 meq/g in the production of spandex fibers. U.S. Patent 5,691,441 discloses that blends of low monol polyols with unsaturation levels of less than 0.010 meq/g are needed to achieve the benefits of the disclosed invention.

U.S. Patent 5,691,441 teaches that "The ultra-low unsaturation polyols have been found to be quantitatively different than both conventional polyols and low unsaturation polyols". In view of this teaching, it would be expected that the properties of spandex made with blends of PTMEG and polyoxypropylene diols having relatively high levels of unsaturation (greater than 0.010 meq/g) would have properties which are markedly inferior to those of fibers based on blends of PTMEG and polyoxypropylene diols containing ultra-low levels of unsaturation (i.e., less than 0.010 meq/g). U.S. Patent 5,691,441 also teaches that "ethylene diamine as the sole chain extender is particularly preferred".

Spandex and spandex-containing fabrics and garments are typically heat-set to provide the fiber or fabric with good dimensional stability and to shape the finished garment. Heat setting, however, has disadvantages. Heat setting is an extra cost to finish knit elastic fabrics that contain spandex. Moreover, typical spandex heat-setting temperatures can adversely affect sensitive companion yarns, e.g., wool, cotton, polypropylene and silk thereby requiring more costly processing. Also, heat-sensitive yarns, such as those from polyacryonitrile, wool and acetate, cannot be used in spandex heat-setting steps, because the high heat-setting temperatures will adversely affect such heat-sensitive yarns.

Spandex having low heat set efficiency requires long times and high temperatures for heat setting. Fabrics containing cotton, wool, polypropylene and silk are desirably heat set at lower temperatures than fabrics based on synthetics such as nylon or polyester. It is often desirable to heat set fabrics containing both cotton and spandex, but if the spandex only has adequate heat-set efficiency at temperatures used for nylon-containing fabrics, the fabric cannot be properly and efficiently heat-set.

A variety of methods have been used to improve the heat-set efficiency of spandex and thereby lower the temperature at which the spandex can be heat-set. For example, U.S. Patent 5,539,037 discloses the use of low concentrations of alkali metal carboxylates and thiocyanate in spandex to increase its heat-set efficiency. However, such salts are readily dissolved during fabric processing, and their effectiveness is thereby reduced.

U.S. Patent 6,403,682 B1 describes spandex with improved heat-set efficiency in which the spandex contains quaternary amine additives. However, all heat-set testing reported was done at 190°C, which is well above the temperatures at which spandex can be heat-set with cotton without damaging the cotton fiber.

U.S. Patent 5,981,686 discloses the use of high proportions of 1,3 diaminopentane (1,3-DAP) chain extender to increase heat-set efficiency.

U.S. Patent Nos. 5,000,899 and 5,948,875 disclose the use of high percentages of 2-methyl-1,5-pentanediamine to increase spandex heat-set efficiency.

None of these patents discloses the use of these co-extenders with blends of polytetramethylene ether glycols and ultra-low unsaturation polyoxypropylene diols. In addition, excessive amounts of co-extender can, in some cases, result in excessive tack, making smooth release from the spool difficult. Excessively high levels of co-extender can also reduce the fibers' chemical resistance to alcohols, dyes, bleaches and other chemicals that may be encountered during fabric manufacturing and setting operations.

The use of mixtures of diamines for the chain extension step in the preparation of various types of spandex polymers is known in the art.

Among others, Frazer et al in U.S. Patent No. 2,929,803, Wittbecker in U.S. Patent No. 3,507,834, McMillin et al in U.S. Patent No. 3,549,596, and Lawrey et al in U.S. Patent 6,737,497 each disclose that mixtures of chain extenders may be employed in making spandex fibers. In U.S. Patent No. 4,973,647, Bretches et al discloses the use of 15-32 mole % of 2-methyl-1,5-pentanediamine as a coextender in making spandex with PTMEG.

U.S. Patent 6,472,494 B2 discloses the use of mixtures of 2,4'-MDI and 4,4'-MDI for making spandex with high heat-set efficiency. However, 2,4'-MDI is not available commercially in pure form. MDI grades which are high in the 2,4' isomer also tend to be much higher in color than pure 4,4' MDI.

In U.S. Patent No. 6,639,041 B2 Nishikawa et al disclose a spandex based on copoly(alkylene ethers) comprising tetramethylene ether and either ethylene ether or 1,2-propylene ether moieties in certain proportions. These copolyethers are believed to be even more expensive than standard polytetramethylene ether glycols which are themselves considerably more expensive than polyoxypropylene diols.

Thus, there is still a need in the trade for new and improved polyether-based spandex yarns that, in addition to their known advantageous characteristics, also can be heat set efficiently at lower temperatures and, simultaneously, provide a desirable balance of other physical properties.

**SUMMARY OF THE INVENTION**

It is an object of the present invention to provide polyurethane/ureas useful for the production of spandex fibers which are made from a significant amount of PPG and which have good heat-set efficiency.

It is a further object of the present invention to provide polyurethane/ureas and spandex fibers made from such polyurethane/ureas which are based in part on less expensive and easier to handle polyoxypropylene glycols and which exhibit improved heat setting characteristics as compared to spandex fibers made solely with PTMEG.

It is also an object of the present invention to provide spandex fibers and a process for making spandex fibers characterized by excellent tenacity, elongation, retractive power, and set.

These and other objects which will be apparent to those skilled in the art are achieved by chain extending an isocyanate-terminated prepolymer which has been produced from an isocyanate-reactive component satisfying specified criteria with a chain extender component that includes: (1) from greater than 25 to 75 equivalent percent (based on total equivalents of chain extender component) of an asymmetric aliphatic and/or cycloaliphatic diamine and (2) a linear diamine such as ethylene diamine. The isocyanate-reactive component includes: (1) at least one PTMEG and (2) at least one polyoxypropylene glycol having a molecular weight greater than about 1500 Da and an unsaturation level less than 0.03 meq/g. The elastomer thus obtained is then spun into fiber.

DESCRIPTION OF THE PREFERRED

EMBODIMENTS OF THE INVENTION

The present invention is directed to polyurethane/ureas suitable for use in the production of spandex fibers, to spandex fibers produced from these polyurethane/ureas and to processes for the production of such polyurethane/ureas and spandex fibers.

The polyurethane/ureas of the present invention are prepared from isocyanate-terminated prepolymers. Suitable prepolymers are produced by reacting an isocyanate-reactive component which is generally composed of diols with an excess of a diisocyanate. The isocyanate-terminated prepolymers typically used to produce this type of elastomer generally have a relatively low isocyanate content. Isocyanate contents of from about 2.25 to about 4.0% are preferred. Particularly preferred prepolymers have isocyanate contents of from 2.5 to 3.75%. The prepolymer is then chain extended in solution.

A key feature of the present invention is the use of a chain extender component which includes at least one asymmetric aliphatic and/or cycloaliphatic diamine and at least one linear diamine to chain extend the isocyanate-terminated prepolymer. The aliphatic and/or cycloaliphatic diamine should be present in an amount of greater than 25 to about 75 equivalent percent, based on total equivalents of chain extender component, preferably from about 30 to about 70 equivalent percent, most preferably, from about 35 to about 65 equivalent percent. The linear diamine is generally used in an amount of from about 25 to 75 equivalent percent (based on total equivalents of chain extender component), preferably, from about 30 to about 70 equivalent percent, most preferably, from about 35 to about 65 equivalent percent.

Examples of suitable asymmetric aliphatic and/or cycloaliphatic chain extenders include: isophorone diamine, 1,2 diaminopropane; methyl-1,3-aminocyclo-hexane; 1,3-diaminocyclohexane; 2-methylpentamethylenediamine (commercially available from DuPont under the name Dytek A); 1,4-diamino-2-methylpiperazine; 1,4-diamino-2,5-dimethylpiperazine; and methyl bis-propylamine.

Examples of suitable linear amine chain extenders include: ethylene diamine; hydrazine; 1,3-propylene diamine; and tetramethylene diamine. Ethylene diamine is most preferred.

Any of the known aliphatic and/or aromatic diisocyanates may be used to produce the isocyanate-terminated prepolymers employed in the present invention. Preferred isocyanates include: linear aliphatic isocyanates such as 1,2-ethylene diisocyanate, 1,3-propylene diisocyanate, 1,4-butylene diisocyanate, 1,6-hexylene diisocyanate, 1,8-octylene diisocyanate, 1,5-diisocyanato-2,2,4-trimethylpentane, 3-oxo-1,5-pentane diisocyanate, and the like; cycloaliphatic diisocyanates such as isophorone diisocyanate, the cyclohexane diisocyanates, preferably 1,4-cyclohexane diisocyanate, fully hydrogenated aromatic diisocyanates such as hydrogenated tetramethylxylylene, diisocyanate, hydrogenated toluene diisocyanates, and hydrogenated methylene diphenylene diisocyanates; and aromatic diisocyanates such as the toluene diisocyanates, particularly the 2,4-isomer, the methylene diphenylene diisocyanates, particularly 4,4'-methylene diphenylene diisocyanate (4,4'-MDI), tetramethylxylylene diisocyanate, and the like. 4,4'-MDI is particularly preferred.

The isocyanate-reactive component used to prepare the isocyanate-terminated prepolymers includes: (1) at least one high molecular weight, low unsaturation polyoxypropylene polyol and (2) at least one PTMEG or a copolymer of tetrahydrofuran ("THF") and 3-methyltetrahydrofuran ("3-MeTHF"). The hydroxyl-terminated copolyethers useful as (2) in the isocyanate-reactive component will generally contain from 4 to 20 mole % of 3-MeTHF and have a molecular weight of from about 650 to about 4,500 (preferably from about 2,400 to about 3,800).

The unsaturation level of the high molecular weight polyoxypropylene polyol component employed in the present invention must be less than or equal to 0.03 meq/g. The polyoxypropylene polyol component used to produce the isocyanate-terminated prepolymer should include at least 70 weight percent, based on the total weight of the high molecular weight polyoxypropylene polyol component, of such low unsaturation polyoxypropylene polyol. Most preferably, the entire amount of high molecular weight polyoxyalkylene polyol present in the polyol component has an unsaturation level of less than 0.03 meq/g, more preferably less than 0.02 meq/g, and most preferably less than 0.015 meq/g. However, it is within the scope of the present invention to include a minor portion of high molecular weight polyoxypropylene polyol which has a somewhat higher unsaturation level, for example, up to about 30 weight percent of a polyoxypropylene polyol having an unsaturation of about 0.06 meq/g, in the polyol component. In such cases, the actual unsaturation of the high molecular weight polyoxy-propylene polyol component should still be about 0.03 meq/g or lower. However, as long as 70 weight percent or more of the high molecular weight polyoxypropylene polyol component is a low unsaturation polyoxypropylene diol, the beneficial results of the invention may be obtained.

As used herein, the term "low unsaturation polyoxypropylene glycol," means a polymer glycol prepared by oxypropylating a dihydric initiator with propylene oxide in the presence of a catalyst in a manner such that the total unsaturation of the polyol product is less than 0.03 meq/g.

The polyoxypropylene glycol may contain oxyethylene moieties distributed randomly or in block fashion. If the oxyethylene moieties are contained in a block, the block is preferably a terminal block. However, randomly distributed oxyethylene moieties are preferred when such moieties are present. In general, the polyoxypropylene glycol should contain no more than about 30 weight percent of oxyethylene moieties, preferably no more than 20 percent, and more preferably no more than about 10 percent. The polyoxypropylene glycol may also contain higher alkylene oxide moieties such as those derived from 1,2- and 2,3-butylene oxide and other higher alkylene oxides, or oxetane. The amount of such higher alkylene oxides may be as much as 10-30% by weight of the polyoxypropylene polyol. However, preferably, the polyoxypropylene polyol is substantially derived from propylene oxide or propylene oxide in admixture with minor amounts of ethylene oxide. All such glycols containing a major portion of oxypropylene moieties are considered polyoxypropylene glycols as that term is used herein.

It has surprisingly been found that spandex systems based on an isocyanate-reactive component which is a blend of PPG and PTMEG produce fibers with acceptable mechanical properties even if the PPG component has an unsaturation level as high as 0.030 meq/g if the chain extender component of the present invention is used. Contrary to what is taught in the prior art, spandex fibers with excellent mechanical properties are obtained even with a PPG component having unsaturation levels greater than 0.010 meq/g if a chain extender component which includes greater than 25 to about 75 equivalent percent of an asymmetric aliphatic and/or cycloaliphatic diamine and a linear diamine (e.g., ethylene diamine) is used.

The high molecular weight, low unsaturation polyoxypropylene glycols useful in the practice of the present invention will generally have a molecular weight of at least about 1500 Da, preferably at least about 2000 Da, and may range up to 8,000 Da or higher. It is particularly preferred that the molecular weight be in the range of from about 1600 Da to about 4000 Da, and most preferably be in the range of from about 1800 Da to about 3000 Da.

"Molecular weight(s)" and "equivalent weight(s)" as used herein are expressed in Da (Daltons) and are the number average molecular weight(s) and number average equivalent weight(s), respectively, unless specified otherwise.

The number average molecular weight for each polyether glycol is determined from the hydroxyl number of the polyether glycol as measured by the imidazole-pyridine catalyst method described by S. L. Wellon et al., "Determination of Hydroxyl Content of Polyurethane Polyols and Other Alcohols", ANALYTICAL CHEMISTRY, Vol. 52, NO. 8, pp. 1374-1376 (July 1980).

It is, of course, possible to use a blend of more than one high molecular weight polyoxypropylene polyol, or to add low molecular weight diols in a minor i.e., up to 10% by weight quantity. However, when such blends are used, the average molecular weight of the blend of high molecular weight components should be at least 1500 Da.

Preferably, the prepolymers are prepared from substantially all difunctional polyols, particularly those which are polyoxypropylene glycol- derived. The term "polyoxypropylene glycol" as used herein includes a minor amount, i.e., up to about 5 weight percent or more of a triol.

The polytetramethylene ether glycol (PTMEG) used to make the polyurethane/urea elastomers of the present invention has a molecular weight greater than 600 Da, preferably from about 600 to about 6,000 Da, most preferably from about 600 to about 3,000 Da.

The PTMEG may be prepared by any of the known methods. One suitable method is the polymerization of tetrahydrofuran in the presence of a Lewis acid catalyst. Suitable polymerization catalysts include anhydrous aluminum chloride and boron trifluoride etherate. Such catalysts are well known and are the subject of numerous patents and publications. PTMEG polyols are commercially available in a variety of molecular weights from numerous sources. For example, Invista sells PTMEG polyols under the trademark Terathane®. BASF Corporation sells PTMEG polyols under the designation PolyTHF. Lyondell Chemical Company sells such polyols under the trademark POLYMEG®.

The isocyanate-reactive component, preferably, a polyol component used to produce the prepolymer from which the spandex fibers of the present invention are produced is predominantly a diol component, i.e., the diol component is preferably from about 25 equivalent percent to about 75 equivalent percent PTMEG and from about 25 to about 75 equivalent percent of a polyoxypropylene diol component having an average unsaturation of less than about 0.03 meq/g, and more preferably from about 35 equivalent percent to about 60 equivalent percent PTMEG and from about 40 to about 65 equivalent percent a polyoxypropylene diol component having an average unsaturation of less than about 0.03 meq/g, preferably less than about 0.02 meq/g, and most preferably less than about 0.015 meq/g.

However, it should be noted that polyoxypropylene diols having unsaturation levels greater than 0.03 meq/g may be included in the polyol component used to produce the prepolymers of the present invention provided that the overall average unsaturation level of the total polyoxyalkylene portion of the polyol component is about 0.03 meq/g or lower.

The diol component used in the practice of the present invention includes: (1) one or more PTMEG diols, and (2) one or more polyoxyalkylene diols having an average unsaturation level in the polyoxyalkylene diol portion of the diol component of less than about 0.03 meq/g. The polyol component used to make prepolymers suitable for use in the practice of the present invention includes this diol component and may also include minor amounts of any other hydroxyl or other reactive species which, together with the diol component, will form an isocyanate-terminated prepolymer when reacted with the isocyanate component.

The isocyanate-reactive component is reacted with an excess of the desired diisocyanate, preferably under an inert atmosphere or under vacuum at slightly elevated temperature, i.e., between 50°C. and 100°C., more preferably between 60°C. and 90°C. It is within the scope of the present invention to react the diisocyanate with both required diols simultaneously or to react first one and then the other of the diols with the diisocyanate. In the embodiment of the invention in which the prepolymer is formed in a solution of at least 10% dimethylacetamide, lower temperatures may be used to obtain a prepolymer having a desirable viscosity. The amount of excess isocyanate is selected so as to provide a % NCO group content in the prepolymer of between about 2.25 weight percent and 4.00 weight percent, preferably between about 2.5 and 3.75 weight percent.

The reaction of the isocyanate with the polyol and any other isocyanate-reactive materials may be catalyzed with any of the catalysts known to promote the reaction of isocyanate, hydroxyl and/or amine groups (e.g., dibutyltin dilaurate), but the reaction may also take place without the use of a catalyst. In a preferred embodiment of the invention, a catalyst which promotes linear polymerization but does not degrade the polymer such as a metal salt of a $C_6$-$C_{20}$ monocarboxylic acid or naphthenic acid is included in the prepolymer-forming mixture. Zinc octoate and calcium octoate are particularly preferred catalysts.

In general, the reaction of the polyol and isocyanate components proceeds until the point at which the isocyanate content becomes constant.

The isocyanate-terminated prepolymer is then dissolved in a solvent, generally, a polar aprotic solvent such as dimethyl acetamide, dimethyl formamide, dimethyl sulfoxide, N-methylpyrrolidone, or the like, and then chain-extended with the chain extender component of the present invention.

The term "polar aprotic solvent" as used herein means a solvent having the capability to dissolve the chain extended polyurethane at the desired concentration while being essentially non-reactive to isocyanate groups.

The polyurethane/urea thus obtained has both hard and soft segments. The terms "soft segment" and "hard segment" refer to specific portions of the polymer chains. The soft segments are the polyether-based portions of the segmented polyurethane/urea polymer, derived from the PTMEG and the polyoxypropylene glycol. The hard segments are those portions of the polymer chains that are derived from the diisocyanate and chain extender. The term "NCO content" refers to the isocyanate group content of the prepolymer, before chain extension.

A chain terminator is generally included in the reaction mixture to adjust the final molecular weight, and thus the intrinsic viscosity, of the polyurethane/urea polymer to the desired value. Usually, the chain terminator is a monofunctional compound such as a secondary amine (e.g., diethylamine or dibutylamine).

After the polymerization reaction is complete, the concentration of the polyurethane (or polyurethaneurea) in the solution typically is about 30% to about 50% by weight; about 31 % to about 40% by weight; or about 35% to about 39% by weight; based on the total weight of the solution. The spandex can then be made by reaction spinning, dry spinning or wet spinning: all of which are known in the art.

Spandex is typically produced by dry spinning. Dry spinning is the process of forcing a polyurethane/urea polymer solution through spinneret orifices into a column filled with hot inert gas such as nitrogen or air to evaporate the solvent and form filaments. The filaments are wound up on cylindrical cores to form spandex supply packages.

Less commonly used methods for preparing spandex are wet spinning and reaction spinning. In wet spinning, the polyurethane/urea polymer solution is pumped through spinnerets into an aqueous bath to remove the solvent before windup of the fiber. In reaction spinning, the isocyanate-terminated prepolymer is extruded through spinnerets into a solvent bath containing diamines. Chain extension and fiber formation occur in the bath and the resulting filaments are wound up on spools after passing through drying ovens.

In one of the preferred embodiments of the present invention, the spandex is formed by dry spinning from the same solvent as was used for the polymerization reactions. For example, the resultant polyurethane can be used to produce spandex which can be wound at a speed of at least 450 meters per minute. In one embodiment of the invention, the spandex can be wound at a speed of at least 700 meters per minute; or at a speed of at least 800 meters per minute. The result is a high-speed spun spandex.

The spandex can be spun as single filaments or can be coalesced by conventional techniques into multi-filament yarns. Each filament is of textile decitex, e.g., in the range of about 6 to about 25 decitex per filament.

A variety of additives can also be used in the spandex of the invention. Exemplary additives include chlorine resistant additives; antibacterial agents; antioxidants; thermal stabilizers (e.g., 1,2-bis(3,5-ditert-butyl-4-hydroxyhydrocinnamoyl)hydrazine); UV light stabilizers (e.g., 2-(2'-hydroxy-3',5'-ditert-butylphenyl)-benzotriazole; 2-(2'-hydroxy-5'-tert-octylphenyl)benzotriazole; 2-(2'-hydroxy-3',5'-ditert-butylphenyl)-5-chloro benzotriazole; 2-(2'-hydroxy-3'-tert-butyl-5'-methylphenyl)-5-chloro benzotriazole; 2-(2'-hydroxy-5'-methylphenyl)-benzotriazole); gas resistant stabilizers; pigments (e.g., ultramarine blue, ultramarine green); delustrants (e.g, titanium dioxide); anti-tackiness additives (e.g., ethylene bis-stearamide, ethylene bis-oleylamide); heat setting additives; dyes; emulsifiers; wetting agents; antistatic agents; pH regulators; filament compacting agents; corrosion inhibitors; dispersing agents (e.g., soluble ionic dispersants; soluble nonionic dispersants; soluble amphoteric dispersants); lubricating agents (e.g., silicone oil), and the like. Additives can be used in an amount up to about 15% by weight, based on the weight of all reactants; in an amount of 0% to about 10% by weight; in an amount of 0% to about 5% by weight; or in an amount of about 0.1% to about 3% by weight.

In one embodiment of the present invention, the spandex-forming composition includes at least one thermal stabilizer. The thermal stabilizer may be 1,2-bis(3,5-di-tert-butyl-4-hydroxyhydrocinnamoyl)hydrazine. The thermal stabilizer may be used in an amount of 0% to about 2% by weight based on the polyurethane, or in an amount of about 0.001 % to about 1% by weight based on the polyurethane.

In another embodiment of the present invention, the spandex-forming composition includes at least one dispersing agent. In one embodiment of the present invention, the dispersing agent is a soluble ionic dispersant. The dispersing agent may be used in an amount of 0 to about 1% by weight based on the polyurethane; or in an amount of about 0.001% to about 0.1 % by weight based on the polyurethane.

In a further embodiment of the present invention, the spandex-forming composition further includes at least one pigment. In another embodiment of the present invention, the pigment is ultramarine blue. The pigment may be used in an amount of 0 to about 0.5% by weight based on the polyurethane; or in an amount of about 0.001 % to about 0.1 % by weight based on the polyurethane.

In an additional embodiment of the present invention, the spandex-forming composition includes at least one delustrant. In another embodiment of the present invention, the delustrant is titanium dioxide. The delustrant may be used in an amount of 0 to about 1% by weight based on the polyurethane; or in an amount of about 0.01 % to about 0.5% by weight based on the polyurethane.

In yet another embodiment of the present invention, the spandex-forming composition further comprises at least one UV stabilizer. In one embodiment, the UV stabilizer is 2-(2'-hydroxy-3',5'-ditert-butylphenyl)-benzotriazole. The UV stabilizer may be used in an amount of 0.01 to about 1 % by weight.

Anti-tackiness additives or anti-blocking agents known in the art can be used in the practice of the present invention. Exemplary anti-tackiness additives and anti-blocking agents include metal stearates and barium sulfate. In one embodiment, the anti-tackiness additive/anti-blocking agent is used in an amount of about 0 to 2% by weight based on the polyurethane, preferably, in an amount of about 0.01 % to 1% by weight based on the polyurethane.

Chlorine resistant additives known in the art can be used in the practice of the present invention. Exemplary chlorine resistant additives include magnesium aluminum hydroxide carbonate hydrates; hydrotalcites, and hydrated magnesium carbonates. In one embodiment, the hydrotalcite has a water of crystallization and is modified to have a $C_{10-30}$ fatty acid (e.g., capric acid, lauric acid, myristic acid, palmitic acid, stearic acid) attached thereto. The chlorine resistant additive may be used in an amount of about 0 to 10% by weight based on the polyurethane; or in an amount of about 0% to 4% by weight based on the polyurethane. The spandex can have excellent resistance to yellowing and high mechanical resistance to chlorine when hydromagnesite, huntite, zinc oxide and poly(N,N-diethyl-2-aminoethyl methacrylate) are used together. Chlorine additives may be used in an amount of 0 to about 5% by weight; or about 0.1 % to about 3% by weight.

Heat setting additives known in the art can be used in the invention. Exemplary heat setting additives include quaternary amine additives, such as those described in U.S. Patent No. 6,403,682, the disclosure of which is incorporated by reference in its entirety. In one embodiment, the heat setting additive is a quaternary amine having a functionality/kg of about 3 to about 100 meq. Other heat-setting additives include alkali metal salts of monocarboxylic acids or thiocyanic acid. Alkali metals which form the cation of the salt include lithium, sodium and potassium. Suitable anions of the salt are $C_{1-10}$ carboxylates or thiocyanates. The carboxylate can be derived from an aliphatic monocarboxylic acid of the formula $R^1COOH$, where $R^1$ is hydrogen or a chain of carbon atoms, such a $C_{1-7}$ chain. The $R^1$ chain of carbon atoms may be saturated or unsaturated and linear or branched. $R^1$ may have minor amounts of substituents, such as lower alkyl, halogen and the like. In one embodiment, the heat-setting additive is acetic acid. The carboxylate can be derived from aromatic monocarboxylic acids and have the formula: $R^3R^2R^4COOH$, where $R^2$ is a benzene ring, $R^3$ is hydrogen, chlorine, bromine or a $C_{1-4}$ lower alkyl, and $R^4$ is optional or a methylene group, an ethylene group or a vinylene group. Anions derived from aromatic monocarboxylic acids include benzoate, cinnamate and chlorobenzoate. The salt additive may help improve the heat-setting characteristics of the spandex when the salt amounts to 0.02 to 0.25% by weight of the polymer of the spandex. When the anion is thiocyanate or derived from an aliphatic monocarboxylic acid, the effective amount of the salt may be less than 0.1 %. When the carboxylate anion is derived from an aromatic monocarboxylic acid the effective amount of the salt may be no more than 0.2%. An alkali metal benzoate, e.g., potassium benzoate, may be used at a concentration in the range of 0.03 to 0.09%, based on the weight of the spandex polymer.

Antioxidants provide high-temperature stability and long-term storage stability. Any antioxidant known in the art, such as amine-based and phenol-based antioxidants, can be used in the spandex of the invention. Exemplary amine-based antioxidants include N,N-di(nonylphenyl)amine, diaryldiamines (e.g., N,N'-diphenylethylenediamine, N,N'-ditolylethylenediamine), naphthylamines (e.g., N-phenyl-1-naphthylamine, N-phenyl-2-naphthylamine), aromatic amines (e.g., N,N'-diisobutyl-p-phenylenediamine, N-cyclohexyl-N'-phenyl-p-phenylenediamine, N,N'-dinaphthyl-p-phenylenediamine, N,N'-ditolyl-p-phenylenediamine, N,N'-diphenyl-p-phenylenediamine, 6-ethoxydihydroquinoline, 4-isopropyoxydiphenylamine), and alkylated diphenylamines. Exemplary phenol-based antioxidants include bisphenols, monophenols, polyphenols and aminophenols. Phenol-based antioxidants include 2,2'-methylenebis(4-methyl-6-tert-butylphenol), 4,4'-methylenebis(2,6-di-tert-butylphenol), 4,4'-butyldienebis(3-methyl-6-tertbutylphenol), 4,4'-thiobis(3-methyl-6-tert-butylphenol, 4-tert-butylpyrocatechol, monomethyl ethers of hydroquinone, 2,6-di-tert-butyl-p-cresol, 1,1,3-tris(2-methyl-4-hydroxy-5-tert-butylphenyl)butane, 2,4,6-tetraaminophenol, and the like. In one embodiment, the antioxidant is triethylyleneglycol bis-3-(3-tert-butyl-4-hydroxy-5-methylphenyl)proprionate, bis-(2,4-dichlorobenzyl)hydroxylamine or a mixture thereof. In one embodiment, the antioxidant is triethyleneglycol bis-3-(3-tert-butyl-4-hydroxy-5-methylphenyl)propionate. In one embodiment, the antioxidant is used in an amount of about 0 to 2% by weight based on the polyurethane; or in an amount of about 0% to 1% by weight based on the polyurethane

Lubricating agents known in the art can also be used, such as dimethylsiloxanes, polydimethylsiloxanes, organo-modified dimethylsiloxanes, organo-modified polydimethylsiloxanes, or mixtures of two or more thereof. Other lubricants include mineral oils, and fatty acid esters containing 8 to 22 carbon atoms in the fatty acid component and 1 to 22 carbon atoms in the alcohol component. Specific examples include palmitic acid methyl ester, isobutyl stearate and tallow fatty acid-2-ethylhexyl ester, polyol carboxylic acid ester, coco fatty acid esters or glycerol and alkoxylated glycerol, silicones, dimethylpolysiloxane, polyalkylene glycols and ethylene/propylene oxide copolymers, and other combinations that include magnesium stearate as well as higher fatty acids of palmitic acid/stearic acid.

Spandex should exhibit excellent lubricity, static resistance and long-term storage stability. For example, spandex can be treated with fiber treatment compositions containing polydimethylsiloxane, polyoxyalkylene-functional diorganopolysiloxane and an antioxidant. The antioxidant can have a straight or branched chain and can be linear or cyclic. In the case of straight chain structures, the molecular chain terminal group can be trimethylsiloxy or dimethyldihydroxysiloxy. Such a fiber treatment composition can contain, for example, 100 weight parts of dimethylpolysiloxane having a viscosity of 3 to 30 $mm^2$/sec at 25°C and 0.5 to 50 weight parts of a polyoxyalkylene-functional diorganopolysiloxane.

The invention also provides spandex supply packages comprising a core (e.g., cylindrical core) and the spandex of the invention wound up on the core.

Articles of clothing (e.g., intimate apparel, swimwear, sportswear, sheer hosiery, socks, dresses, suits, outerwear, and the like) comprising the spandex of the invention and/or disposable personal care products (e.g., baby diapers, feminine care products, adult incontinence garments, protective masks, medical garments, industrial garments and the like) can be made with spandex produced in accordance with the present invention.

The spandex of the invention can be used in articles of clothing, personal care products or other fabrics in conjunction with one or more natural and/or man-made fibers and/or yarns, such as nylon, polyester, rayon, acrylic, acetate, lastex, wool, hemp, ramie, jute, cotton, linen, and the like. The spandex of the invention can be used in conjunction with fibers and/or yarn.

Processes are known for making stretch-woven fabrics, including fabric design and construction, weaving, heat-setting and dyeing and finishing of filling-stretch, warp-stretch and two-way stretch woven fabrics. A core-spun yarn is a combination yarn that is produced by spinning a sheath of "hard" fibers (i.e., conventionally drawn, oriented non-elastomeric fibers, filaments or strands) around a core of elastomeric strand while the elastomeric strand (e.g., spandex) is under tension and elongated to several times its relaxed length. Subsequent release of the tension and contraction of the elastomeric core strand yields a stretchable combination yarn. Other processes for making stretchable combination yarns are known wherein elastomeric strand is combined with hard fibers, for example, by covering, air-jet entangling, plaiting and the like. However, woven stretch fabrics made with such combination yarns typically have much smaller dimensions than the length and width of the loom on which the fabrics were woven.

Fabrics or garments containing spandex are often heat-set under tension to stabilize their dimensions. Heat-setting "sets" spandex in an elongated form. Heat-setting is also known as re-deniering, whereby a spandex of higher denier is drafted, or stretched, to a lower denier, and then heated to a sufficient temperature for a sufficient period of time to stabilize the spandex at the lower denier. Heat-setting permanently changes the spandex at a molecular level so that recovery tension in the stretched spandex is mostly relieved and the spandex becomes stable at a new and lower denier. According to the invention, the sufficient temperature for heat-setting may be from about 130°C to about 175°C rather than the 185-195°C range currently being used in many commercial production processes. The optimum temperature and heat set time will depend upon the specific spandex-forming materials used and can be readily determined by one skilled in the art.

Fabric produced in accordance with the present invention comprises the spandex of the invention and at least one companion fiber. The companion fiber comprises one or more man-made and/or natural fibers and/or yarn. Man-made and natural fibers and/or yarn include nylon, polyester, rayon, acrylic, acetate, lastex, wool, hemp, ramie, jute, cotton, linen, and the like. The man-made and/or natural fibers and/or yarn can be combined with the spandex of the invention by operations such as wrapping, covering, core spinning, air-jet intermingling, air-jet entangling, plaiting and the like.

In one embodiment of the present invention, the fabric or combination yarn comprises the spandex of the invention and cotton. In another embodiment, the fabric or combination yarn comprises the spandex of the invention and wool. In another embodiment, the fabric or combination yarn comprises the spandex of the invention and a man-made fiber.

Any of the processes for producing spandex polymers known to those skilled in the art may be used to produce the polyurethane/urea elastomers and spandex fibers of the present invention. Such processes are disclosed, for example, in U.S. Patents 3,384,623; 3,483,167; and 5,340,902, which are herein incorporated by reference.

Having generally described this invention, a further understanding can be obtained by reference to certain specific examples which are provided herein for purposes of illustration only and are not intended to be limiting unless otherwise specified.

EXAMPLES

Testing Procedures:

*Elongation and Modulus Test:* A sample of material to be tested was cut to approximately twelve inches with scissors or 12" gauge shears and immediately tested with an Instron Model 4502 constant rate of extension instrument equipped with a 10 Newton full scale range load cell. Caution was taken to ensure that the test materials were not stretched prior to testing. The samples were cycled at a constant rate of extension of 35 inches/minute between the limits of 0 to 300% elongation during a particular cycle. The load power (LP) is the stress on the fiber at a particular % elongation. After 1 cycle, the fiber is stretched to determination elongation.

*Tensile Test:* The tensile strength of the material to be tested was measured with a Globe Force Gauge Stand having a 1/2" diameter revolving shaft and a vertically mounted spring gauge or digital force gauge which records force in ounces or pounds. The scale has a pulley which must be positioned approximately 4 inches from the shaft of the Force Gauge Stand.

A sample of the material to be tested was looped over the pulley of the scale, or the equivalent of the pulley. Then, the shaft of the Force Gauge was revolved. While the shaft was revolving, the loose ends of the sample were wrapped around the shaft until the ends became trapped, and the sample began rotating on its own. The peak load was then recorded in pounds. Tenacity was calculated by converting the pound force value to grams and dividing by two times the initial denier of the fiber.

*Percent Isocyanate Moiety:* In the Examples, the percent isocyanate moiety content of the capped glycol were calculated from the following formula:

$$\%\text{NCO} = \frac{100 \times \left(2 \times \text{NCO}\, fw \times (\text{C.R.} - 1)\right)}{\text{glycol}\, mw + (\text{C.R.} \times \text{diisocyanate}\, mw)}$$

wherein "*fw*" means formula weight, "*mw*" means molecular weight, "C.R." means Capping Ratio (the molar ratio of diisocyanate to polymeric glycol), "glycol" means polymeric glycol, and "NCO" refers to the isocyanate moiety, whose formula weight is 42.02. For improved spinning continuity, it is preferred that the NCO-moiety content in the capped glycol used in making the spandex of the invention be about 2.25-4.00%.

*Heat-Set Efficiency:* To measure heat-set efficiency, spandex samples were mounted on a 4 inch frame and stretched 1.5 times (50%). The frame (with sample) was then placed horizontally in an oven pre-heated to the test temperature for two minutes. The frame (with fiber) was then removed from the oven and allowed to cool to room temperature. The sample, still on the frame, were immersed in boiling water for 30 minutes. The frame and fiber were then removed from the bath and allowed to dry. The length of the fiber sample was measured and heat-set efficiency, (HSE) was calculated from the following equation:

$$\% \text{ heat set efficiency} = 100 \text{ x} \frac{\text{heat-set length - original length}}{\text{stretched length - original length}}.$$

The materials used in the Examples were as follows:

POLYOL A:    A polyoxypropylene diol having a molecular weight of 2000 Da and an unsaturation level of about 0.005 meq/g.

POLYOL B:    A polytetramethylene ether glycol having a number average molecular weight of 2,000.

MDI:    4,4'-diphenylmethane diisocyanate.

ZNO:    Zinc octoate (commercially available as Borcher's Octa-Soligen Zn 22).

DMAc:    Dimethylacetamide.

EDA:    Ethylene diamine.

IPDA:    Isophorone diamine.

DEA:    Diethylamine.

### Example 1

To a 1-liter reaction flask, 254 g of de-watered POLYOL A and 254 g of de-watered POLYOL B were added in the amounts indicated in Table 1. At 55°C, 132.7 g of MDI were added and the reaction was allowed to proceed at 76°C for 2 hours 15 minutes to form a mixture of isocyanate-terminated prepolymer and unreacted diisocyanate. To this mixture, 264 g of DMAc were added and stirred until the reaction mixture was homogeneous.
After 1 hour, a chain extender component made up of ethylene diamine, isophoronediamine, and diethylamine present in the amounts indicated in Table 1 which were dissolved in DMAc was added to the reaction mixture. An additive slurry containing gas fade additive, antioxidant, thermal stabilizer, anionic dispersing agent, ultramarine blue, titanium dioxide, and an antiblocking agent was thoroughly mixed into the prepolymer and chain extender solution. After mixing for one hour under vacuum, the resultant spandex fiber solution was transferred into quart jars. The spandex fiber solution was then spun into fibers by a standard dry spinning process. The properties of these fibers are reported in Table 1.

### Comparative Examples 2-4

The procedure used in Comparative Examples 2 -4 was the same as that used for Example 1. Table 1 shows the relative amounts of the materials used and the properties of the fibers produced.

### Comparative Example 5

A single 73 kg batch of prepolymer was prepared from MDI, POLYOL A and POLYOL B in the amount indicated in TABLE 1 in an autoclave reactor. The prepolymer was diluted with DMAc and reacted in a continuous mechanical polymerizer with a DMAc/amine stream in order to obtain solutions having the compositions and characteristics listed in TABLE 1. On an equivalents basis, there was a 2% excess of amine groups relative to NCO groups. The solutions were then dry spun to form 40 denier fibers. The properties of these fibers are reported in Table 1.

### Comparative Example 6

A blend of 1495 g of POLYOL A and 996.5 g of POLYOL B were dehydrated in a vacuum for 1 hour at 120°C. After cooling to room temperature, 50 ppm of ZNO were mixed in. 531.9 g of MDI were added at 55°C. The reaction mixture was heated for 90 minutes at 80°C until the prepolymer had an NCO content of 2.39%.

At 60°C, 1296.4g of DMAc were added to the prepolymer and the mixture was cooled to 25°C. The homogenized mixture of prepolymer and DMAc had an NCO content of 1.62%. 18.48 g of EDA, 9.52 g IPDA, 1.36 g DEA and 2474 g DMAc were added to 1804 g of the diluted prepolymer with rapid mixing. After one hour of mixing, the resulting solution had a viscosity of 55.0 Pa·s. An additional 69.0 g of the diluted prepolymer were added and allowed to mix for 30 minutes. At this point the solution had a viscosity of 89 Pa·s. An additional 39.2 g of diluted prepolymer were added and allowed to mix for 30 minutes. This resulted in a final solution having a viscosity of 102 Pa·s and a solids content of approximately 30%.

0.3% by weight Mg stearate, 2.0% by weight Cyanox® 1790 antioxidant (commercially available from Cyanamid), 0.5% by weight Tinuvin® 622 stabilizer (commercially available from Ciba-Geigy), and 0.3% by weight of the polyether siloxane Silwet® L7607 (a product of Union Carbide Corp., USA) were added to the viscous polymer solutions (quantities based on polyurethane solids). The solution was then dry spun to form 40 denier fibers. The properties of these fibers are reported in Table 1.

As can be seen in Table 1, only compositions within the range of the invention gave the required heat-set efficiency along with good tenacity, elongation, modulus, elasticity and chemical resistance.

In Comparative Example 2, increasing the percent of low unsaturation polyoxypropylene diol in the polyol component and decreasing the capping ratio resulted in greatly improved HSE even though the level of asymmetric diamine was very similar to that of Example 1. However, the composition in Example 2 is not practical due to the very low modulus and poor spinning performance of the fiber made from this composition.

In Comparative Example 3, the polyol composition is the same as in Example 1. The capping ratio and prepolymer % NCO are also nearly identical to that in Example 1. However, the level of asymmetric diamine (IPDA) was much higher than the level used in Example 1. Although the resulting fiber made from this composition displayed good elongation, it had unacceptably low modulus and poor spinning continuity.

In Comparative Example 4, the polyol composition was again the same as in Example 1 but the % NCO is higher than in Example 1 and outside the range of the invention. Polyurethane/ureas based on prepolymers containing high % NCO values require greater amounts of asymmetric diamine in order to have adequate heat-set efficiency. In Example 4, no linear diamine was used and the diamine component was based solely on the asymmetric IPDA. The resulting fiber had a desirably high heat-set efficiency at 150°C. It also spun quite well but had low tenacity and elongation. In addition, the fiber prepared based on this composition was exceedingly tacky and had inadequate resistance to chemicals typically encountered in fabric washing, bleaching, and dying operations.

In Comparative Example 5, the percentage of low unsaturation polyoxypropylene diol in the polyol component was 40 equivalent %. The prepolymer capping ratio was 1.65 and the % NCO was 2.26. With the low capping ratio, the resulting spandex had excellent elongation and tenacity. However, due to the low percentage of asymmetric diamine chain extender used in this example, the fiber had inadequate heat-set efficiency.

By comparison, the fiber in Comparative Example 6 displayed improved HSE relative to that in Comparative Example 5. The higher HSE is especially surprising given the slightly higher capping ratio and prepolymer % NCO in Comparative Example 6. In Comparative Example 6, the same level of asymmetric diamine was used as in Comparative Example 5 but a greater percentage of low unsaturation polyoxypropylene diol was used in the polyol component.

Table 1

| Example | 1 | 2* | 3* | 4* | 5* | 6* |
|---|---|---|---|---|---|---|
| POLYOL A (eq.%) | 50 | 65 | 50 | 50 | 40 | 60 |
| POLYOL B (eq.%) | 50 | 35 | 50 | 50 | 60 | 40 |
| NCO:OH | 2.09 | 1.575 | 2.05 | 2.4 | 1.65 | 1.70 |
| Prepolymer (% NCO) | 3.63 | 2.01 | 3.51 | 4.52 | 2.26 | 2.43 |
| ZNO, ppm | 25 | 45 | 25 | 25 | 50 | 50 |
| EDA (eq.%) | 39.0 | 37.5 | 0 | 0 | 80.5 | 82.5 |
| IPDA (eq.%) | 58.5 | 60 | 97.5 | 97.5 | 15 | 15 |
| DEA (eq.%) | 2.5 | 2.5 | 2.5 | 2.5 | 4.5 | 2.5 |

Table continued

| Example | 1 | 2* | 3* | 4* | 5* | 6* |
|---|---|---|---|---|---|---|
| Spinning speed (ft./min.) | 2850 | 2850 | 2850 | 2850 | 2624 | 2624 |
| Fiber Properties | | | | | | |
| Denier | 30 | 40 | 30 | 30 | 40 | 40 |
| Tenacity (gm/denier) | 1.10 | -- | 0.91 | 0.76 | 1.25 | 1.38 |
| Elongation (%) | 468 | -- | 450 | 347 | 515 | 527 |
| 1st Cycle, LP200[1] (gm/denier) | 0.081 | -- | 0.061 | 0.174 | 0.15 | 0.14 |
| 1st Cycle, LP250[2] (gm/denier) | 0.122 | -- | 0.087 | 0.28 | -- | -- |
| 1 st Cycle, LP300[3] (gm/denier) | 0.194 | -- | 0.129 | 0.45 | 0.26 | 0.23 |
| 2nd Cycle, LP200[4] (gm/denier) | 0.046 | -- | 0.034 | 0.58 | -- | -- |
| 2nd Cycle, LP250[5] (gm/denier) | 0.072 | -- | 0.052 | 0.106 | -- | -- |
| HSE @ 150°C, % | -- | 72 | -- | 85 | -- | -- |
| HSE @ 170°C, % | 70 | 90 | -- | -- | 51 | 58 |
| Spinning Performance | Good | Poor | Poor | Good | -- | -- |
| Notes | Good HSE; Nontacky; Good chemical resistance; Good Modulus; Good elongation. | Very low Modulus | Low Modulus; Tacky; Poor chemical resistance | Tacky; Poor chemical resistance | Low HSE | Low HSE |
| * Comparative Example<br>eq.% = equivalent percent<br>[1] Load Power at 200% elongation after first cycle<br>[2] Load Power at 250% elongation after first cycle<br>[3] Load Power at 300% elongation after first cycle<br>[4] Load Power at 200% elongation after second cycle<br>[5] Load Power at 250% elongation after second cycle | | | | | | |

It should be noted that the spinning speeds used in these examples are much higher than those quoted in many other patents. As a result, the heat set results here cannot be compared directly with those found in other patents. Given the high spinning speeds, the heat set results are considered quite good.

The % NCO ranges used in the present invention are in the range of about 2.25 to 4%. The % NCO is increased as the proportion of asymmetric diamine in a mixture of extenders is increased. If the % NCO is too low, the load power becomes excessively low and the polyurethane/urea solution is difficult to spin into spandex. If the % NCO is too high, the elongation and heat-set efficiency of the spandex becomes low and the load power becomes unacceptably high. At high % NCO levels, a large percentage of asymmetric diamine in the mixture of extenders is required in order to obtain a fiber with suitable heat-set efficiency. However, excessively high ieveis of asymmetric diamine can reduce the fiber's chemical resistance to alcohols, dyes, bleaches and other chemicals that may be encountered during fabric manufacturing and setting operations. As can be seen in the preceding examples, only compositions within the range of the invention give the required heat-set efficiency at low temperatures along with good tenacity, elongation, modulus, elasticity and chemical resistance.

Having now fully described the invention, it will be apparent to one of ordinary skill in the art that many changes and modifications can be made thereto without departing from the spirit or scope of the invention as set forth herein.

## Claims

1. A segmented polyurethane/urea produced by reacting in solution:

   a) an isocyanate-terminated prepolymer having a free isocyanate group content of from about 2.25 to about 4% which is the reaction product of

   (1) a stoichiometric excess of at least one diisocyanate with
   (2) an isocyanate-reactive component comprising:

   (i) a diol component comprising:

   (a) from about 25 equivalent percent to about 75 equivalent percent of at least one polyoxypropylene diol having a molecular weight of at least 1500 Da and an average unsaturation level less than or equal to 0.03 meq/g, and
   (b) from about 25 equivalent percent to about 75 equivalent percent of at least one polytetramethylene ether glycol having a molecular weight of from about 600 Da to about 6000 Da; and, optionally,
   (ii) one or more other materials containing at least one functional group that is reactive with an isocyanate group, provided that the sum of the equivalent percents of (i) and (ii) is 100 equivalent percent, with

   b) a diamine chain extender comprising:

   (1) from greater than 25 to about 75 equivalent percent, based on total equivalents of b), of at least one asymmetric aliphatic and/or cycloaliphatic diamine and
   (2) at least one linear diamine

   in the presence of
   c) a solvent.

2. The polyurethane/urea of Claim 1 in which from about 30 to about 70 equivalent percent of the diamine chain extender is an asymmetric aliphatic and/or cycloaliphatic diamine.

3. The polyurethane/urea of Claim 1 in which from 35 to 65 equivalent percent of the diamine chain extender is an asymmetric aliphatic and/or cycloaliphatic diamine.

4. The polyurethane/urea of Claim 1 in which ethylene diamine is the linear diamine.

5. The polyurethane/urea of Claim 1 in which from about 40 to about 65 equivalent percent of the polyol component is a polyoxy-propylene diol having a molecular weight of at least 1500 Da and an average unsaturation level of less than about 0.03 meq/g.

6.  The polyurethane/urea of Claim 1 in which the polyoxy-propylene diol having an average unsaturation level of less than about 0.03 meq/g has an average molecular weight of from about 2000 to about 8000 Da.

7.  The polyurethane/urea of Claim 1 in which the polyoxy-propylene diol having a molecular weight of at least 1500 Da has an average unsaturation level of less than 0.02 meq/g.

8.  The polyurethane/urea of Claim 1 in which the diisocyanate is diphenylmethane diisocyanate.

9.  A spandex fiber spun from the polyurethane/urea of Claim 1.

10. A process for the production of spandex fiber comprising spinning a polyurethane/urea which is the reaction product of:

   a) an isocyanate-terminated prepolymer which is the reaction product of

      (1) a stoichiometric excess of a diisocyanate with
      (2) an isocyanate-reactive component comprising

         (i) a dioi component comprising

            (a) from about 25 equivalent percent to about 75 equivalent percent of at least one polyoxypropylene diol having a molecular weight in excess of about 1500 Da and an average unsaturation level of less than about 0.03 meq/g, and
            (b) from about 25 equivalent percent to about 75 equivalent percent of at least one polytetramethylene ether glycol having a molecular weight of at least 600 Da; and,

         optionally,
         (ii) one or more other materials containing at least one functional group that is reactive with an isocyanate group, provided that the sum of the equivalent weight percents of (i) and (ii) is 100 equivalent percent, having a free isocyanate group content of from about 2.25 to about 4%
         with

   b) a diamine chain extender comprising

      (1) from about 25 to about 75 equivalent percent, based on total equivalents of b), of an asymmetric aliphatic and/or cycloaliphatic diamine and
      (2) at least one linear diamine in

   c) a solvent.

11. The process of Claim 10 in which the diisocyanate is diphenylmethane diisocyanate.

12. The process of Claim 10 in which the linear diamine is ethylene diamine.

13. The process of Claim 10 in which from 30 to 70 equivalent percent of the diamine chain extender is an asymmetric aliphatic and/or cycloaliphatic diamine.

14. The process of Claim 10 in which from 35 to 65 equivalent percent of the diamine chain extender is an asymmetric aliphatic and/or cycloaliphatic diamine.

15. The process of Claim 10 in which the solvent is dimethyl acetamide.

**European Patent Office**

**EUROPEAN SEARCH REPORT**

Application Number

EP 05 02 6916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 1 367 076 A (BAYER CORPORATION; BAYER AG) 3 December 2003 (2003-12-03)<br>* page 4, paragraph 28 - page 5, paragraph 35 *<br>* page 6, paragraph 45 - paragraph 51 *<br>* example 1 *<br>& US 2003/225241 A1 (LAWREY BRUCE D ET AL) 4 December 2003 (2003-12-04)<br>----- | 1-15 | INV.<br>C08G18/12<br>C08G18/48<br>C08G18/22<br>D01F6/70 |
| X | EP 1 367 073 A (BAYER CORPORATION; BAYER AG) 3 December 2003 (2003-12-03)<br>* examples 1,2 *<br>* page 4, paragraph 31 - page 6, paragraph 44 *<br>* page 6, paragraph 50 - page 7, paragraph 53 *<br>----- | 1-15 | |
| X | US 6 624 281 B1 (LAWREY BRUCE D) 23 September 2003 (2003-09-23)<br>* column 4, line 36 - column 6, line 61 *<br>* column 7, line 47 - column 9, line 3 *<br>* example 1 *<br>----- | 1-15 | |
| D,A | US 2002/193550 A1 (NISHIKAWA HIROSHI ET AL) 19 December 2002 (2002-12-19)<br>* example 3 *<br>----- | 1-15 | TECHNICAL FIELDS SEARCHED (IPC)<br><br>C08G<br>D01F |

The present search report has been drawn up for all claims

| Place of search | Date of completion of the search | Examiner |
|---|---|---|
| Munich | 10 April 2006 | Neugebauer, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 05 02 6916

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2006

| Patent document cited in search report | | Publication date | Patent family member(s) | | Publication date |
|---|---|---|---|---|---|
| EP 1367076 | A | 03-12-2003 | BR | 0301724 A | 24-08-2004 |
| | | | CA | 2430048 A1 | 30-11-2003 |
| | | | CN | 1461761 A | 17-12-2003 |
| | | | JP | 2004035878 A | 05-02-2004 |
| | | | MX | PA03004694 A | 14-02-2005 |
| | | | US | 2003225241 A1 | 04-12-2003 |
| US 2003225241 | A1 | 04-12-2003 | BR | 0301724 A | 24-08-2004 |
| | | | CA | 2430048 A1 | 30-11-2003 |
| | | | CN | 1461761 A | 17-12-2003 |
| | | | EP | 1367076 A1 | 03-12-2003 |
| | | | JP | 2004035878 A | 05-02-2004 |
| | | | MX | PA03004694 A | 14-02-2005 |
| EP 1367073 | A | 03-12-2003 | BR | 0302035 A | 20-07-2004 |
| | | | CA | 2430043 A1 | 30-11-2003 |
| | | | CN | 1500819 A | 02-06-2004 |
| | | | JP | 2004035879 A | 05-02-2004 |
| | | | MX | PA03004522 A | 29-10-2004 |
| | | | US | 2003225242 A1 | 04-12-2003 |
| US 6624281 | B1 | 23-09-2003 | BR | 0301726 A | 24-08-2004 |
| | | | CA | 2430046 A1 | 30-11-2003 |
| | | | CN | 1461760 A | 17-12-2003 |
| | | | EP | 1367072 A1 | 03-12-2003 |
| | | | JP | 2004035877 A | 05-02-2004 |
| | | | MX | PA03004695 A | 14-02-2005 |
| US 2002193550 | A1 | 19-12-2002 | NONE | | |

For more details about this annex : see Official Journal of the European Patent Office, No. 12/82